# EUROPÄISCHE PATENTSCHRIFT

(11) **EP 4 256 933 B1**
(45) Veröffentlichungstag und Bekanntmachung des Hinweises auf die Patenterteilung: **01.07.2026**
(21) Anmeldenummer: 23166697.5
(22) Anmeldetag: 05.04.2023
(51) Int. Cl.: A01C 7/10

(54) **LANDWIRTSCHAFTLICHE AUSBRINGMASCHINE**
AGRICULTURAL APPLICATION MACHINE
MACHINE D'ÉPANDAGE AGRICOLE

(30) Priorität: 08.04.2022 DE 102022108536
(43) Veröffentlichungstag der Anmeldung: 11.10.2023
(73) Patentinhaber: Pöttinger Landtechnik GmbH, 4710 Grieskirchen (AT)
(72) Erfinder: RUSCH, Uwe, 4710 Grieskirchen (AT); KIRCHMAYR, Alois, 4710 Grieskirchen (AT)
(74) Vertreter: Lorenz Seidler Gossel Part. mbB

(56) Entgegenhaltungen:
- DE-C- 475 086
- DE-C- 826 522
- DE-C- 877 224
- DE-C- 914 912

## Beschreibung

Die vorliegende Erfindung betrifft eine landwirtschaftliche Ausbringmaschine, die als Sä- und/oder Drill- und/oder Düngerstreumaschine ausgebildet sein kann, mit einer Auffangmulde zum Auffangen des Ausbringguts in einem Probe- und/oder Anlaufbetrieb, wobei die Auffangmulde an einen Ausbringleitungshalter angekoppelt und zusammen mit diesem mittels einem Stellantrieb von einer Sä- bzw. Ausbringstellung in eine Auffangstellung und zurück verstellbar ist.

Mechanische Sä- bzw. Drillmaschinen besitzen eine Auffangmulde, um das Saatgut bzw. den Dünger, das/der im regulären Maschinenbetrieb an sich im Boden abzulegen ist, in bestimmten Betriebssituationen aufzufangen. Dies erfolgt beispielsweise in einem kurzen Probebetrieb, dem die Ausbringmaschine im Stand unterzogen wird, um zu prüfen, ob die für den Betrieb eingestellten Parameter den gewünschten Werten entsprechen. Ein solcher Probebetrieb wird bisweilen als "Abdrehen" bezeichnet. Hierfür wird das Ausbringgut nicht in den Boden eingebracht, sondern in der genannten Auffangmulde aufgefangen, um beispielsweise abgewogen zu werden. Dies erfolgt im Rahmen der Vorbereitung der mechanischen Sä- bzw. Drillmaschine für die Aussaat, was u.a. die Einstellung auf das gewünschte Saatgut, dessen Kaliber und Menge beinhaltet.

Um das abgedrehte Saatgut bzw. Düngermittel aufzufangen, wird die Auffangmulde unter das Sägehäuse gefahren, wobei gleichzeitig der Ausbringleitungshalter, der sich im regulären Sä- bzw. Ausbringbetrieb unter dem Sägehäuse befindet, weggefahren wird, sodass das abgedrehte Saatgut nicht in die Ausbringleitungen gelangt, sondern in der Auffangmulde gesammelt wird.

In ähnlicher Weise kann die genannte Auffangmulde auch in anderen Rüst- bzw. Anlaufsituationen genutzt werden, beispielsweise wenn das Saatgut gewechselt und aus dem vorherigen Säzyklus noch in der Maschine befindliches Ausbringgut entleert werden soll, ohne dies auf den Boden zu verschütten.

Um die Ausbringmulde unter das Sägehäuse zu fahren und gleichzeitig den Ausbringleitungshalter wegzufahren, ist es praktisch, die Auffangmulde an den Ausbringleitungshalter anzukoppeln, sodass diese gemeinsam von einem Stellantrieb verfahren werden können. Der Stellantrieb kann dabei am Ausbringleitungshalter, oder auch an der Auffangmulde angreifen, um die Baugruppe zu verstellen, wobei die Auffangmulde und/oder der Ausbringleitungshalter verschieblich gelagert sein können, beispielsweise mittels einer Schlittenführung entlang einem näherungsweise horizontalen, insbesondere in Fahrtrichtung weisenden Verfahrweg.

Beispielweise zeigt die Schrift DE 826 522 B eine Entleerungsmulde für Sämaschinen, die mit Bodenklappen am Sägehäuse gekoppelt ist, sodass beim Öffnen der Bodenklappen die Entleerungsmulde zwangsläufig unter das Sägehäuse gezogen wird und während der Abdrehprobe bei geschlossenen Bodenklappen verschoben werden kann. Der Stellantrieb weist hierbei einen Schwenkhebel auf, der über eine Gabel die verschieblich gelagerte Baugruppe verstellen kann. Durch die Ankopplung an die Bodenklappen des Sägehäuses ist der Verstellmechanismus jedoch recht komplex bzw. sperrig. Zum anderen muss in recht mühsamer Weise die Baugruppe in der regulären Saatstellung durch zwei Schieberiegel gesichert werden, um zu verhindern, dass die Auffangmulde ungewollt durch die Vibrationen im Säbetrieb unter das Sägehäuse fährt.

Weitere Sämaschinen mit Ausbringmulden zum Abdrehen des Saatguts im Probebetrieb zeigen die Schriften DE 914 912 C, DE 475 086 C und DE 877 224 C.

Hiervon ausgehend liegt der vorliegenden Erfindung die Aufgabe zugrunde, eine verbesserte landwirtschaftliche Ausbringmaschine der genannten Art zu schaffen, die Nachteile des Standes der Technik vermeidet und letzteren in vorteilhafter Weise weiterbildet. Insbesondere soll eine einfache Verstellung des Ausbringleitungshalters und der damit gekoppelten Auffangmulde zwischen der regulären Säbetriebsstellung und der Probe- bzw. Anfahrbetriebsstellung erreicht werden und gleichzeitig ein einfaches Entnehmen der Auffangmulde beispielsweise zum Auswiegen des aufgefangenen Saatguts ermöglicht werden.

Erfindungsgemäß wird die genannte Aufgabe durch eine landwirtschaftliche Ausbringmaschine gemäß Anspruch 1 gelöst. Bevorzugte Ausgestaltungen der Erfindung sind Gegenstand der abhängigen Ansprüche.

Es wird also vorgeschlagen, den Stellantrieb zum Verfahren der Auffangmulde selbsthemmend auszubilden, um die Auffangmulde in der regulären Sä- bzw. Ausbringstellung durch die Selbsthemmkräfte des Stellantriebs zu halten, sodass das Betätigen einer zusätzlichen Verriegelung obsolet wird. Erfindungsgemäß besitzt der Stellantrieb in der Ausbringstellung eine Selbsthemmung, die die Auffangmulde und den angekoppelten Ausbringleitungshalter in der bestimmungsgemäßen Ausbringstellung hält, auch wenn die beim bestimmungsgemäßen Ausbringbetrieb zum Ausbringen des Ausbringgut auf den Boden herrschenden Kräfte und Vibrationen auf die Auffangmulde und den Ausbringleitungshalter einwirken. Die Selbsthemmung des Stellantriebs erlaubt es, auf die Betätigung einer zusätzlichen Verriegelungs- bzw. Sperr- oder Klemmvorrichtung, die gleichwohl vorgesehen sein könnte, zu verzichten. Hierdurch erleichtert sich die Bedienung und auch die Ausbildung der Funktionsbaugruppe zum Verstellen der Auffangmulde deutlich.

In Weiterbildung der Erfindung kann der Stellantrieb ein Getriebe, insbesondere ein Schwenkhebelgetriebe, aufweisen, das auf dem Weg in die Ausbringstellung einen kinematischen Totpunkt überfährt und/oder überstreckt wird, sodass Reaktionskräfte im Getriebe, die entstehen, wenn die Auffangmulde und/oder der Ausbringleitungshalter versucht, sich aus der Ausbringstellung zurück in die Auffangstellung zu bewegen, das Stellgetriebe in die Richtung weitertreiben, in die sich das Getriebe an sich bewegt, um die Auffangmulde bzw. den Ausbringleitungshalter aus der Auffangstellung in die Ausbringstellung zu verfahren. Mit anderen Worten treiben die genannten Reaktionskräfte, wenn die Auffangmulde bzw. der Ausbringleitungshalter beispielsweise durch Vibrationen im Säbetrieb versucht, sich zurück in die Auffangstellung zu bewegen, das Getriebe und damit den Stellantrieb nicht rückwärts, sondern weiter vorwärts, wobei die Stellantriebsbewegung in diese Vorwärtsrichtung durch einen Stellwegsanschlag begrenzt sein kann, sodass die Auffangmulde und der angekoppelte Ausbringleitungshalter verlässlich in der bestimmungsgemäßen Sä- bzw. Ausbringstellung gehalten werden.

Insbesondere kann der Stellantrieb zumindest einen schwenkbar gelagerten Stellhebel aufweisen, der mit der Auffangmulde und/oder dem Ausbringleitungshalter gekoppelt ist und auf seinem Weg in die Ausbringstellung über einen kinematischen Totpunkt hinwegfährt und in der Sä- bzw. Ausbringstellung von einem Stellwegsanschlag abgestützt ist, gegen den der genannte Stellhebel getrieben wird, wenn die Ausbringmulde bzw. der damit gekoppelte Ausbringleitungshalter versucht, sich in die Auffangstellung zurück zu bewegen.

Insbesondere kann der genannte schwenkbar gelagerte Stellhebel einen Teil einer Kurbeltriebstufe bilden, die einerseits einen Kurbelhebel besitzt, der mit einer Kurbelwelle verbunden bzw. um eine Kurbelachse schwenkbar gelagert ist, und andererseits einen Triebhebel bzw. -stößel aufweist, der einerseits mit dem genannten Kurbelhebel gelenkig verbunden und andererseits gelenkig mit dem Ausbringleitungshalter und/oder der Auffangmulde und/oder einem damit verbundenen Stelltriebsbauteil verbunden ist. Wird der Kurbelhebel um die Kurbelachse verdreht bzw. geschwenkt, treibt dies den Triebhebel und damit die daran angebundene Auffangmulde entweder in deren Auffangstellung, in der die Mulde unter dem Sägehäuse liegt, oder in deren Ausbringstellung, in der die Auffangmulde nicht unter dem Sägehäuse liegt.

Die Kinematik der genannten Kurbeltriebstufe ist dabei derart beschaffen, dass sich das Gelenk zwischen Kurbelhebel und Triebhebel auf dem Weg in die Ausbringstellung überstreckt, sodass eine Reaktionskraft-Wirkungslinie, die durch die beiden Gelenkpunkte des Triebhebels geht, vor Überstrecken des Gelenks auf der einen Seite der Kurbelachse und nach Überstrecken des Gelenks auf der gegenüberliegenden Seite der Kurbelachse vorbeiführt. Mit anderen Worten überstreicht die genannte Reaktionskraftgerade durch die beiden Gelenkpunkte des Triebhebels die Kurbelachse der Kurbeltriebstufe, wenn diese ihren kinematischen Totpunkt überfährt.

Durch eine solche ihren kinematischen Totpunkt überfahrende bzw. sich überstreckende Kurbeltriebstufe kann die verfahrbare Baugruppe umfassend Auffangmulde und Ausbringleitungshalter auch bei hohen Kräften oder starken Vibrationen verlässlich in der Ausbringstellung gehalten werden und es wird eine ausreichende Selbsthemmung des Stellantriebs auch für raue Betriebsbedingungen bereitgestellt.

Die genannte Kurbeltriebstufe kann dabei nach Überstrecken gegen den genannten Stellantriebsanschlag laufen, der den Stellweg des Stellantriebs begrenzt. Beispielsweise kann der Triebhebel oder der genannte Kurbelhebel gegen einen Stellwegsanschlag fahren, wenn der kinematische Totpunkt überfahren bzw. das Kurbeltriebsgelenk überstreckt ist. Alternativ oder zusätzlich kann aber auch der Kurbelwelle oder einem damit drehfest verbundenen Antriebshebel der genannte Stellantriebsanschlag zugeordnet werden.

Mithilfe einer Vorspann- und/oder Federeinrichtung kann der Verstellmechanismus zum Verstellen der Auffangmulde vorteilhafterweise bistabil ausgebildet werden, sodass der Verstellmechanismus automatisch in die eine oder andere Endstellung, das heißt die Auffangstellung oder die Sästellung fährt bzw. in jeder dieser beiden Endstellungen elastisch gehalten wird. Dabei gibt es auf dem Verstellweg von der einen in die andere Endstellung einen instabilen Totpunkt, von dem aus sich der Mechanismus bei schon kleineren Auslenkungen beispielsweise durch Vibrationen mittels der Vorspann- bzw. Federkraft in die eine oder andere Endstellung bewegt. Insbesondere kann eine Kurbeltriebstufe der beschriebenen Art mit einer Vorspann- und/oder Federeinrichtung bistabil konfiguriert werden.

In vorteilhafter Weiterbildung der Erfindung kann eine Federeinrichtung vorgesehen sein, die den Stellantrieb bzw. dessen Getriebe gegen den Stellwegsanschlag treibt, wenn der kinematische Totpunkt überfahren ist. Beispielsweise kann eine solche Federeinrichtung den zumindest einen schwenkbar gelagerten Stellhebel, beispielsweise den vorgenannten Triebhebel und/oder den vorgenannten Kurbelhebel in eine Richtung vorspannen, die den jeweiligen Hebel gegen den Stellantriebsanschlag treibt, wenn die Anordnung ihren kinematischen Totpunkt überfahren hat.

Beispielsweise kann die Federeinrichtung ein Vorspannen der Auffangmulde und/oder des Ausbringleitungshalters vorsehen, die die Auffangmulde und/oder den Ausbringleitungshalter aus der jeweiligen Ausbringstellung auf die Auffangstellung zuzutreiben versucht. Die genannte Vorspannkraft muss dabei nicht über den gesamten Stellweg der Baugruppe wirksam bzw. aktiv sein, sondern es kann beispielsweise ausreichen, die Vorspannkraft nur in einem Endbereich des Stellwegs um die Ausbringstellung herum vorzusehen, um einerseits eine leichtgängige Verstellung aus der Auffangstellung heraus zu ermöglichen, andererseits aber eine verlässliche Selbsthemmung in der Sä- bzw. Ausbringstellung zu erreichen.

Wird die Auffangmulde für den Säbetrieb in die Ausbringstellung weggefahren, erfolgt dies zumindest auf einem Teil des Stellwegs unter Überwindung der genannten Vorspannkraft. Sobald der Stellantrieb seinen kinematischen Totpunkt überfährt, treibt die genannte Vorspannkraft den Stellantrieb gegen den genannten Stellwegsanschlag und hält den Ausbringleitungshalter verlässlich in seiner Sä- bzw. Ausbringstellung.

Unabhängig davon, ob die genannte Vorspann- und/oder Federeinrichtung vorgesehen ist oder nicht, kann der Stellantrieb in einfacher Weiterbildung der Erfindung als manueller Stellantrieb ausgebildet sein, der ein manuell zu betätigendes Stellelement wie beispielsweise einen Schwenkhebel oder ein Betätigungsrad aufweisen kann, um den Ausbringleitungshalter und die daran angekuppelte Auffangmulde in die gewünschte Stellung zu verfahren. Ein solches manuelles Betätigungselement kann mit der genannten Kurbeltriebstufe antriebsverbunden sein, beispielsweise einen Stellhebel oder ein Stellrad umfassen, das drehfest mit der Kurbelachse des Kurbelhebels verbunden sein kann, um den Kurbelhebel der Kurbeltriebstufe zu verschwenken.

Alternativ oder zusätzlich zu einem solchen manuellen Betätigungselement kann der Stellantrieb aber auch einen Antriebsmotor umfassen, der die Antriebsbewegung für den Ausbringleitungshalter und die Auffangmulde erzeugt, wobei die Antriebsbewegung des Antriebsmotors ggf. über eine Getriebestufe auf den Ausbringleitungshalter und/oder die Auffangmulde übertragen werden kann. Beispielsweise kann der Antriebsmotor die genannte Kurbeltriebstufe antreiben, beispielsweise über eine Stirnradstufe, die den Kurbeltriebhebel verschwenkt.

Ein solcher Antriebsmotor kann beispielsweise ein Elektromotor oder ein Hydraulikmotor sein.

Ein solcher Elektromotor oder Hydraulikmotor kann in Weiterbildung der Erfindung selbsthemmend ausgebildet sein, um eine jeweils angefahrene Stellung der Auffangmulde durch Selbsthemmung halten zu können, insbesondere auch wenn der Elektro- oder Hydraulikmotor abgeschaltet oder von der Energieversorgung abgetrennt ist. Dabei kann der genannte Elektromotor oder Hydraulikmotor selbst eine ausreichende Selbsthemmung besitzen, und/oder es kann dem Elektro- oder Hydraulikmotor eine Getriebestufe zugeordnet sein, die eine ausreichende Selbsthemmung aufbringt. Bei ausreichender Selbsthemmung des Elektromotors oder Hydraulikmotors und/oder einer zugeordneten Getriebestufe braucht die Antriebsstufe keinen überfahrbaren Totpunkt, der oben beschrieben wurde, bzw. braucht ein solcher Totpunkt nicht überfahren werden, um die Auffangmulde in der angefahrenen Stellung zu halten. Gleichwohl kann ein solcher überfahrbarer Totpunkt aber auch dann vorgesehen sein, wenn ein Elektromotor bzw. Hydraulikmotor eingesetzt wird, der die angefahrene Stellung auch per Selbsthemmung halten kann.

Um die genannte Selbsthemmung des Stellantriebs, die die Auffangmulde oder Verriegelung in der Sä- bzw. Ausbringstellung halten kann, zu erzielen, kann der Stellantrieb auch - alternativ oder zusätzlich zu der genannten Kurbeltriebstufe - eine Spindelantriebsstufe umfassen, wobei die Gewindesteigung der Gewindespindel so bemessen sein kann, dass die Selbsthemmung der Spindelantriebsstufe ausreichend groß ist, um die Auffangmulde auch bei den üblichen Erschütterungen und Vibrationen, die im Säbetrieb auf die Auffangmulde bzw. den Ausbringleitungshalter einwirken, in der Sä- bzw. Ausbringstellung zu halten.

Eine solche Spindelantriebsstufe kann mit einem Antriebsmotor kombiniert sein, beispielsweise einem Elektromotor und/oder eine elektromotorische Spindeltriebstufe bilden. Alternativ kann ein solcher Spindeltrieb aber auch in einer manuellen Ausführung vorgesehen und durch ein manuelles Betätigungselement betätigt werden, um den Ausbringleitungshalter und die daran angekuppelte Auffangmulde zu verstellen.

Beispielsweise kann der Spindelantrieb mit seiner Spindelmutter mit dem Ausbringleitungshalter oder ggf. auch mit der Auffangmulde antriebsverbunden sein, sodass der Ausbringleitungshalter und die Auffangwanne der translatorischen Stellbewegung der Spindelmutter folgen.

Der Verstellweg des Ausbringleitungshalters und/oder der Auffangwanne bzw. - mulde zwischen deren Ausbring- und Auffangstellungen kann näherungsweise und grob gesprochen eine liegende, näherungsweise fahrtrichtungsparallele Bahn bilden und/oder zumindest teilweise unter dem Sägehäuse verlaufen, wobei beispielsweise der Ausbringleitungshalter unter dem Sägehäuse nach vorne weg in die Auffangstellung und die Auffangmulde nach vorne unter das Sägehäuse in die genannte Auffangstellung gefahren werden kann, während beim Zurückfahren in die Sä- bzw. Ausbringstellung die Auffangmulde unter dem Sägehäuse nach hinten weggefahren und der Ausbringleitungshalter unter das Sägehäuse in die genannte Sästellung gefahren werden kann.

Gemäß einem weiteren Aspekt der vorliegenden Erfindung ist der genannte Verfahrweg des Ausbringleitungshalters und/oder der Auffangmulde jedoch nicht exakt und/oder nicht vollständig gerade, sondern umfasst zueinander abgewinkelte und/oder unterschiedlich gekrümmte und/oder gerade und gekrümmte Abschnitte, entlang derer der Ausbringleitungshalter und/oder die Auffangmulde aus der Sä- bzw. Ausbringstellung in die Auffangstellung und zurück verfahren werden können.

Insbesondere kann der Verfahrweg zumindest einen abschüssigen Wegabschnitt und einen näherungsweise horizontalen Wegabschnitt umfassen und/oder einen stärker ansteigenden und einen weniger stark ansteigenden Abschnitt umfassen. Vorteilhafterweise kann der Verstellweg in einem Endabschnitt zur Sä- bzw. Ausbringstellung hin einen ansteigenden Verlauf besitzen, sodass der Ausbringleitungshalter vor Erreichen der Sä- bzw. Ausbringstellung ein Stück weit nach oben bzw. mit einer Komponente nach oben auf das Sägehäuse zu verfahren wird und umgekehrt beim Verfahren aus der Sä- bzw. Ausbringstellung zur Auffangstellung zunächst ein Stück weit nach unten vom Sägehäuse wegverfahren wird. Ein solcher Steigungsabschnitt des Stellwegs angrenzend an bzw. in der Nachbarschaft zur Sä- bzw. Ausbringstellung ermöglicht ein exaktes Anschließen bzw. ein sehr nahes Hinfahren der Ausbringleitungen bzw. des Ausbringleitungshalters an das Sägehäuse, um das Saatgut bzw. den Dünger in der Sä- bzw. der Ausbringstellung verlässlich in die Ausbringleitungen einführen bzw. fallenlassen zu können. Umgekehrt wird Luft bzw. Abstand gewonnen, wenn der Ausbringleitungshalter mit der angekuppelten Auffangmulde aus der Sä- bzw. Ausbringstellung weg in die Auffangstellung gefahren wird.

Ein mittlerer Abschnitt und/oder ein auf die Auffangstellung zuführender Abschnitt des Stellwegs kann näherungsweise liegend ausgebildet sein, insbesondere horizontal verlaufen.

Der genannte Stellweg für den Ausbringleitungshalter und die Auffangwanne kann durch eine geeignete Lagerung oder Führung vorgegeben werden, mittels dessen/derer der Ausbringleitungshalter und/oder die Auffangwanne beweglich gelagert sind.

Die genannte Lagerung bzw. Schiebeführung kann dabei vorteilhafterweise dazu ausgebildet sein, den Saatgutleitungshalter und/oder die Auffangmulde translatorisch entlang dem vorgegebenen Stellweg zu verfahren, ohne dass der Ausbringleitungshalter und/oder die Auffangmulde eine signifikante Verschwenkung dabei erfahren würde. Insbesondere kann die Auffangmulde entlang dem Stellweg von der Lagerung bzw. Schiebeführung in einer zumindest näherungsweise horizontalen Stellung gehalten werden, um zu verhindern, dass in der Auffangmulde gesammeltes Saatgut oder Dünger ungewollt aus der Mulde fallen würde.

Insbesondere kann als Lagerung eine Schlittenführung vorgesehen sein, die einen verschieblich gelagerten Schlitten umfasst, an dem der Ausbringleitungshalter und/oder die Auffangmulde gelagert sein kann. Der genannte Schlitten kann dabei auf einem oder mehreren Schiebeführungsprofilen verfahrbar gelagert sein, beispielsweise durch eine Gleitlagerung oder auch durch eine Wälzlagerung. Beispielsweise kann das zumindest eine Schiebeführungsprofil eine schlitz- bzw. nutförmige Führungsbahn umfassen, in der bzw. entlang derer der Schlitten verschoben werden kann.

Das zumindest eine Führungsprofil kann die zuvor beschriebenen zueinander abgeknickten und/oder unterschiedlich gekrümmten und/oder unterschiedlich geneigten Stellwegsabschnitte realisieren, um den verschieblichen Schlitten und damit den daran gelagerten Ausbringleitungshalter und/oder die daran gelagerte Auffangmulde in der gewünschten Weise vorzugsweise translatorisch entlang der vorgegebenen Führungsbahn zu verfahren.

Alternativ zu einer Schlittenführung kann als Lagerung für den Ausbringleitungshalter und/oder die Auffangmulde aber auch eine Lenkerführung vorgesehen sein, beispielsweise in Form einer Parallellenkerführung, die den Ausbringleitungshalter und/oder die Auffangmulde schwenkbar lagern würde. Eine solche Lenkerführung kann vorteilhafterweise dazu konfiguriert sein, zum Ende des Stellwegs in die Sä- bzw. Ausbringstellung hin einen stärkeren Hub für den Ausbringleitungshalter auf das Sägehäuse zu vorzusehen und/oder umgekehrt zur Auffangstellung hin einen flacheren Verlauf zu nehmen als zur Ausbringstellung hin.

In vorteilhafter Weiterbildung der Erfindung kann der Ausbringleitungshalter von der genannten Führungsvorrichtung, insbesondere der genannten Schlittenführung gelagert sein, sodass die Führung die Bewegungsbahn des Ausbringleitungshalters vorgibt. Die Auffangmulde kann an dem Ausbringleitungshalter befestigt bzw. gelagert sein, beispielsweise mittels einer Lagerkonsole, die an dem Ausbringleitungshalter befestigt sein kann.

Vorteilhafterweise kann die Auffangmulde an dem Ausbringleitungshalter und/oder einer mit der Führungsvorrichtung gekoppelten Lagerkonsole lösbar gelagert sein, sodass die Auffangwanne entnommen werden kann und/oder relativ zu dem Ausbringleitungshalter verschoben oder weggeschwenkt oder wegbewegt werden kann, beispielsweise um das aufgefangene Ausbringgut wiegen zu können oder zurück in den Saatguttank kippen zu können oder auch um andere Zusatzfunktionen ausführen zu können.

Die Erfindung wird nachfolgend anhand eines bevorzugten Ausführungsbeispiels und zugehörigen Zeichnungen näher erläutert. In den Zeichnungen zeigen:
- Fig. 1:: eine Seitenansicht einer Sä- und/oder Drillmaschine nach einer vorteilhaften Ausführung der Erfindung, die den Stellantrieb und die bewegliche Lagerung des Ausbringleitungshalters und der Auffangmulde zeigt, wobei der Ausbringleitungshalter und die Auffangmulde in der Sä- bzw. Ausbringstellung gezeigt sind,
- Fig. 2:: eine Seitenansicht der Sämaschine ähnlich Fig. 1, wobei die Auffangmulde und der damit gekoppelte Ausbringleitungshalter in einer Zwischenstellung zwischen der Sästellung und der Auffangstellung gezeigt sind,
- Fig. 3:: eine Seitenansicht der Sämaschine ähnlich den Fig. 1 und 2, wobei die Auffangmulde und der damit gekoppelte Ausbringleitungshalter in der Auffangstellung gezeigt sind,
- Fig. 4:: eine perspektivische Seitenansicht der Sämaschine aus den vorhergehenden Figuren schräg von vorne, wobei der Ausbringleitungshalter und die Auffangmulde in der auch in Fig. 1 gezeigten Sä- bzw. Ausbringstellung gezeigt sind, und
- Fig. 5:: eine perspektivische Seitenansicht der Sämaschine aus den vorhergehenden Figuren ähnlich Figur 4, wobei der Ausbringleitungshalter und die Auffangmulde wie in Fig. 3 in der Auffangstellung gezeigt sind.

Wie die Figuren zeigen, kann die Ausbringmaschine 1 als Sä- und/oder Drillmaschine ausgebildet sein, die einen Saatguttank umfassen kann, aus dem Saatgut und/oder Dünger zu einem oder mehreren Sägehäusen 3 gelangen oder gefördert werden kann, in dem/denen eine Dosiereinrichtung vorgesehen sein kann, um das Saatgut bzw. den Dünger dosiert in Ausbringleitungen 4 zu geben, über die das Saatgut bzw. der Dünger dann zu Ausbringelementen wie Säscharen transportiert und im Boden abgelegt wird.

Die genannten Ausbringleitungen 4 sind dabei an einem Ausbringleitungshalter 5 montiert, der in seiner Sä- bzw. Ausbringstellung unter dem Sägehäuse 3 positioniert ist, sodass das Saatgut bzw. der Dünger aus dem Sägehäuse 3 in die Leitungen 4 gelangen kann.

An dem genannten Ausbringleitungshalter 5 ist eine Auffangmulde 6 angekoppelt, sodass die beiden Komponenten, das heißt der Ausbringleitungshalter 5 und die Auffangmulde 6 zusammen verfahren werden können. Beispielsweise kann die Auffangmulde 6 an einem Muldenhalter 7 montiert bzw. angeordnet sein, der an dem Ausbringleitungshalter 5 befestigt sein kann, beispielsweise von dem genannten Ausbringleitungshalter 5 auskragen kann. Die Befestigung des Muldenhalters 7 kann dabei verschieden beschaffen sein, beispielsweise starr oder auch gelenkig, insbesondere derart, dass die Auffangmulde 6 relativ zum Ausbringleitungshalter 5 verschwenkt werden kann. Auch verschiebliche Lagerungen sind möglich.

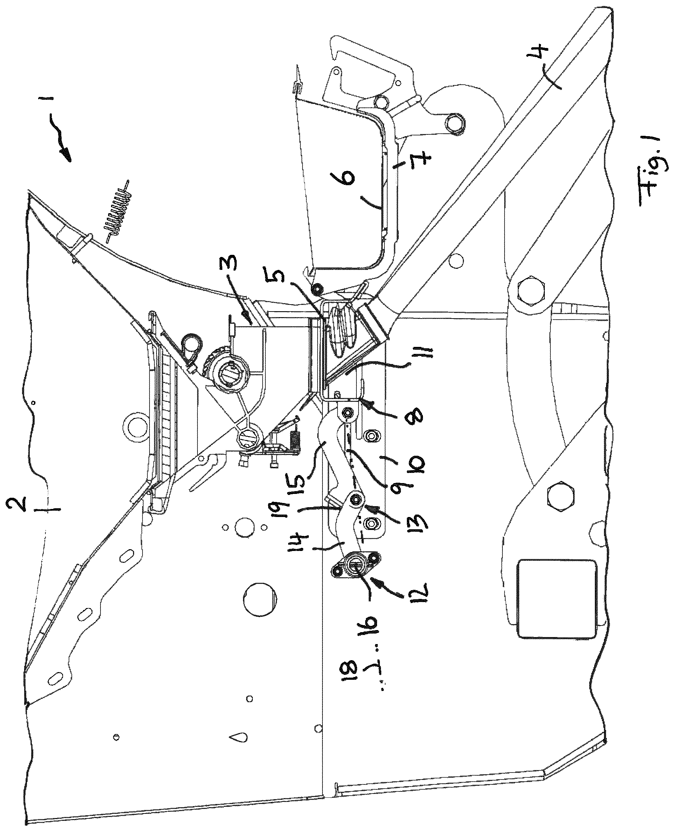

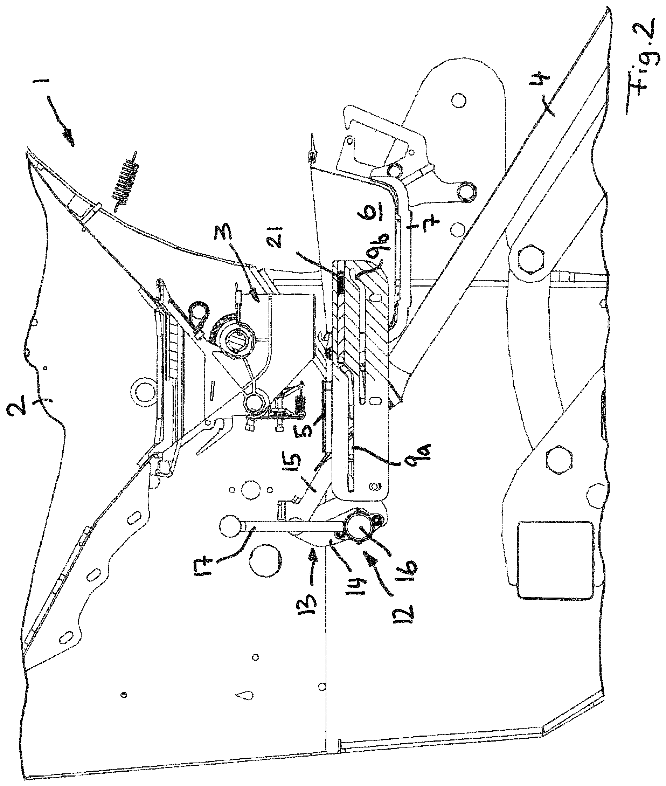

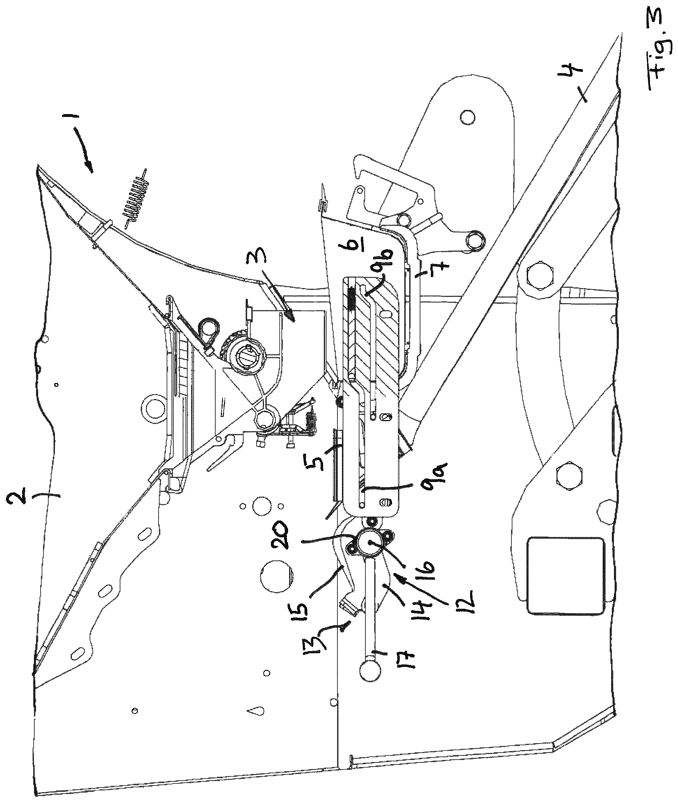

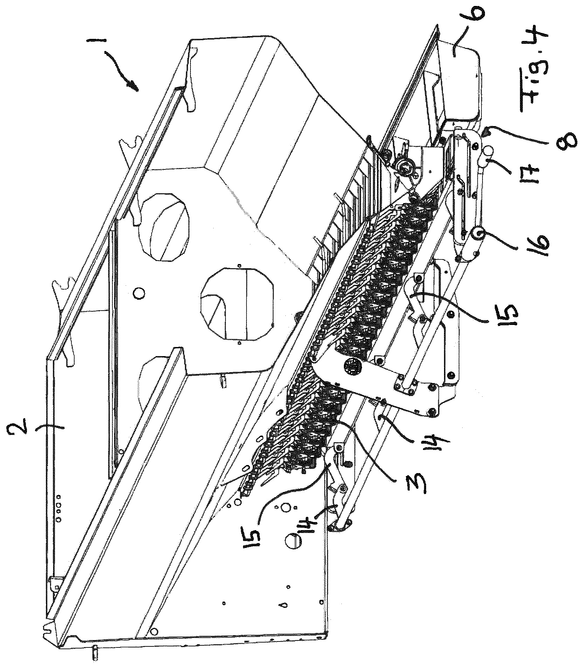

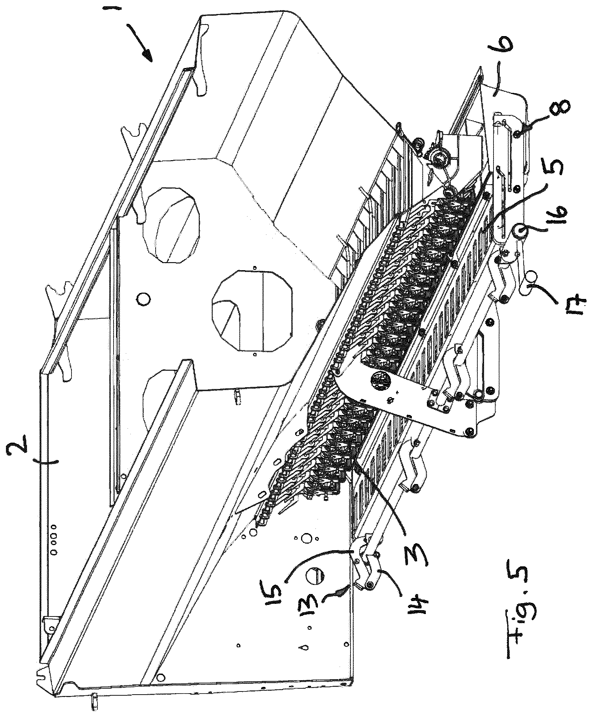

Der Ausbringhalter 5 und damit auch die angekoppelte Auffangmulde 6 sind dabei relativ zu dem Sä- bzw. Ausbringgehäuse 3 verstellbar gelagert, um die genannten Komponenten aus der in Figur 1 und Figur 4 dargestellten Sä- bzw. Ausbringstellung in die in Figur 2 dargestellte Auffangstellung und zurück verbringen zu können. In der Sä- bzw. Ausbringstellung ist der Ausbringleitungshalter 5 am bzw. unter dem Sägehäuse 3 angeordnet und diesem so zugeordnet, dass Saatgut aus dem Sägehäuse in die Ausbringleitungen gelangen kann, während die Auffangmulde 6 ein Stück weit vom Sägehäuse 3 beabstandet positioniert ist, vgl. Figur 1 und Figur 4. Umgekehrt ist in der Auffangstellung die Auffangmulde 6 unter dem Sägehäuse 3 positioniert, während der Ausbringleitungshalter 5 ein Stück weit beabstandet positioniert ist, vgl. Figur 3 und Fig. 5.

Die bewegliche Lagerung des Ausbringleitungshalters 5 und der daran angekoppelten Auffangmulde 6 kann dabei eine Schlittenführung 8 umfassen, die einen Verstellweg 9 für den Ausbringleitungshalter 5 und die Auffangmulde 6 vorgibt.

Die genannte Schlittenführung 8 kann dabei ein oder mehrere Führungsprofile 10 umfassen, die sich näherungsweise liegend in Fahrtrichtung erstrecken können, um den Ausbringleitungshalter 5 und die Auffangmulde 6 relativ zum Sä- bzw. Ausbringgehäuse 3 nach vorne und zurück nach hinten verstellen zu können.

An dem zumindest einen Führungsprofil 10 kann ein Schlitten 11 verschiebbar gelagert und geführt sein, an welchem der Ausbringleitungshalter 5 starr befestigt sein kann. Der genannte Schlitten 11 kann beispielsweise entlang beispielsweise schlitzförmiger Führungsbahnen an dem bzw. den Führungsprofilen 10 translatorisch verschieblich geführt sein, wobei eine Gleitlagerung oder auch eine Wälzlagerung vorgesehen sein kann. Beispielsweise kann das Führungsprofil 10 nutförmige Längsschlitze aufweisen, die den Stellweg 9 für den Schlitten 11 und damit für den Ausbringleitungshalter 5 und die Auffangmulde 6 vorgeben.

Wie die Figuren 1 bis 3 zeigen, kann der genannte Stellweg 9 einen liegenden, insbesondere etwa horizontalen und geraden Abschnitt 9a aufweisen, der die Baugruppe zu deren Auffangstellung hin führt. Andererseits kann der Verstellweg 9 einen ansteigenden bzw. zur Horizontalen geneigten Abschnitt 9b aufweisen, der die verstellbare Baugruppe zu deren Sä- bzw. Ausbringstellung hin führt.

Insbesondere kann der liegende Abschnitt 9a einen vorderen Teil des Stellwegs 9 und der ansteigende Abschnitt 9b einen hinteren Abschnitt des Verstellwegs 9 bilden. Alternativ oder zusätzlich kann der liegende Abschnitt 9a zur Auffangstellung führen und/oder an die Auffangstellung angrenzen, während der geneigte Abschnitt 9b zur Sä- bzw. Ausbringstellung führt bzw. dazu benachbart angeordnet ist.

Der liegende Abschnitt 9a und der geneigte Abschnitt 9b können durch einen knickförmigen oder bogenförmigen Übergangsbereich miteinander verbunden sein und zusammen den genannten Stellweg 9 definieren.

Durch die Konturierung des genannten Stellwegs 9 kann beim Verfahren aus der Sä- bzw. Ausbringstellung die zu verfahrende Baugruppe zunächst ein Stück weit nach unten von dem Sä- bzw. Ausbringgehäuse 3 wegbewegt und sodann mit ausreichend Spiel gegenüber dem Sä- bzw. Ausbringgehäuse 3 nach vorne verfahren werden. Umgekehrt kann beim Verfahren in die Ausbring- bzw. Sästellung der Ausbringleitungshalter 5 gegen Ende des Verstellwegs nach oben an das Sägehäuse 3 herangefahren werden.

Der Stellantrieb 12 zum Verstellen der Auffangmulde 6 bzw. des Ausbringleitungshalters 5 kann eine Kurbeltriebstufe 13 umfassen, die einen Kurbelhebel 14 sowie einen damit gelenkig verbundenen Triebhebel 15 aufweisen kann. Der genannte Kurbelhebel 14 kann um eine Kurbelachse 15 schwenkbar gelagert, beispielsweise an einem Maschinenrahmen oder einem damit verbundenen Strukturbauteil ortsfest, aber drehbar gelagert sein, wobei sich die genannte Kurbelachse 16 quer zu dem Verstellweg 9 erstreckt, beispielsweise liegend quer zur Fahrtrichtung angeordnet sein kann.

Der um die Kurbelachse 16 schwenkbare Kurbelhebel 14 kann durch ein Betätigungselement 17 beispielsweise in Form eines Handhebels verschwenkt werden, wobei aber auch ein motorischer Antrieb in Betracht käme.

Der Triebhebel 15 wird von der Schwenkbewegung des Kurbelhebels 14 angetrieben, wobei der genannte Triebhebel 15 einerseits gelenkig mit dem Kurbelhebel 14 verbunden und andererseits gelenkig mit dem Ausbringleitungshalter 5 verbunden sein kann. Insbesondere kann der Triebhebel 15 an dem Schlitten 11 gelenkig gelagert sein. Einerseits folgt der Triebhebel 15 der Kreisbahnbewegung des Kurbelhebels 14, genauer gesagt des Gelenks zwischen Kurbelhebel 14 und Triebhebel 15. Hierdurch verstellt der Triebhebel 15 den Schlitten 11, wobei der Triebhebel 15 hierbei relativ zum Schlitten 11 verschwenkt.

Wie ein Vergleich der Figuren 1 bis 3 zeigt, kann der Kurbelhebel 14 der Kurbeltriebstufe 13 vorteilhafterweise um etwa 180° verschwenkt werden.

Insbesondere kann die Kurbeltriebstufe 13 auf dem Verstellweg zwischen Auffangstellung und Sästellung einen kinematischen Totpunkt überfahren, um in der Sä- bzw. Ausbringstellung eine Selbsthemmung zu erzielen, die den Ausbringleitungshalter 5 auch ohne separate Verriegelung in der Sä- bzw. Ausbringstellung halten kann.

Wie Figur 1 zeigt, kann das Überfahren des kinematischen Totpunkts dadurch erreicht werden, dass sich das Gelenk zwischen Kurbelhebel 14 und Triebhebel 15 überstreckt. Eine virtuelle Verbindungsgerade 18, die die beiden Gelenke des Triebhebels 15 am Kurbelhebel 14 einerseits und am Schlitten 11 andererseits verbindet, überstreicht beim Betätigen der Kurbeltriebstufe 13 deren Kurbelachse 16, sodass die genannte Verbindungsgerade 18 in einer Endstellung des Stellantriebs auf der einen Seite der Kurbelachse 16 und in der anderen Endstellung auf der gegenüberliegenden Seite der Kurbelachse 16 zu liegen kommt bzw. sich daran vorbei erstreckt. Betrachtet man die Figuren 1 und 2, geht die Verbindungsgerade 18 in der Sä- bzw. Ausbringstellung gemäß Figur 1 unterhalb der Kurbelachse 16 hindurch, während sie beim Verschwenken des Kurbelhebels 14 zum Verstellen der Baugruppe in die Auffangstellung über die Kurbelachse 16 hinwegstreicht und sich dann oberhalb derselben erstreckt.

Beim Überfahren des kinematischen Totpunkts der Kurbeltriebstufe 13 kehrt sich die Bewegungsrichtung der verfahrbaren Baugruppe, das heißt des Ausbringleitungshalters 5 und der Aufbringmulde 6 um, wobei diese Bewegungsumkehr minimal ist, da sich durch die gestreckte Stellung durch Kurbelhebel 14 und Triebhebel 15 für die Bewegung des Triebhebels 15 kein oder nur kaum ein Hebel einstellt.

Wie Figur 1 zeigt, kann der Stellantrieb 12 in den Endstellungen gegen Stellwegsanschläge 19, 20 fahren, die den Stellweg des Stellantriebs 12 und damit die Verstellung der verfahrbaren Baugruppe begrenzen. Beispielsweise können die genannten Stellwegsanschläge 19, 20 die Schwenkbewegung des Kurbelhebels 14 begrenzen, beispielsweise auf näherungsweise 180°, vgl. Figuren 1 bis 3.

Eine Vorspann- und/oder Federeinrichtung 21 kann vorgesehen sein, um den Stellantrieb 12 verlässlich in seiner Endstellung zu halten, die der Sä- bzw. Ausbringstellung des Ausbringleitungshalters 5 entspricht. Eine solche Vorspann- und/oder Federeinrichtung 21 kann die Kurbeltriebstufe 13 bistabil machen, insbesondere dahingehend, dass beim Überfahren des kinematischen Totpunkts die Kurbeltriebstufe 13 gegen den Stellantriebsanschlag 19 getrieben wird. Beispielsweise kann die Vorspann- und/oder Federeinrichtung 21 eine Stellkraft auf den Schlitten 11 bereitstellen, die diesen, zumindest im letzten Abschnitt des Stellwegs 9 um die Sä- bzw. Ausbringstellung herum versucht, dem Schlitten 11 aus der Sä- und/oder Ausbringstellung weg in die Auffangstellung zu treiben. Da die Kurbeltriebstufe 13 aber überstreckt ist, kann der Schlitten 11 nicht zurückfahren, sondern wird gegen den Stellwegsanschlag 19 getrieben.

## Patentansprüche

1. Landwirtschaftliche Ausbringmaschine, insbesondere Sä- und/oder Drill- und/oder Düngerstreumaschine, mit einer Auffangmulde (6) zum Auffangen des Ausbringguts in einem Probe- und/oder Anlaufbetrieb, wobei die Auffangmulde (6) an einen Ausbringleitungshalter (5) angekoppelt und zusammen mit diesem mittels eines Stellantriebs (12) von einer Sä- und/oder Ausbringstellung in eine Auffangstellung und zurück verstellbar ist, **dadurch gekennzeichnet, dass** der Stellantrieb (12) in der Ausbringstellung eine Selbsthemmung besitzt, die die Auffangmulde (6) und den angekoppelten Ausbringleitungshalter (5) in der Sä- und/oder Ausbringstellung hält.

2. Landwirtschaftliche Ausbringmaschine nach dem vorhergehenden Anspruch, wobei der Ausbringleitungshalter (5) und die Auffangmulde (6) in der Sä- und/oder Ausbringstellung ausschließlich durch den Stellantrieb und dessen Selbsthemmung, ohne zusätzliche Verriegelungsmittel, gehalten sind.

3. Landwirtschaftliche Ausbringmaschine nach einem der vorhergehenden Ansprüche, wobei der Stellantrieb (12) ein Getriebe, insbesondere Schwenkhebelgetriebe, aufweist, das auf dem Weg in die Sä- und/oder Ausbringstellung einen kinematischen Totpunkt überfährt und/oder überstreckbar ist, so dass Getriebereaktionskräfte, die durch Rückwärtsbewegungen und/oder -belastungen des Ausbringleitungshalters (5) aus der Sä- und/oder Ausbringstellung zurück in die Auffangstellung entstehen, das Getriebe in die Vorwärtsrichtung weitertreiben.

4. Landwirtschaftliche Ausbringmaschine nach dem vorhergehenden Anspruch, wobei das genannte Getriebe eine Kurbeltriebstufe (13) umfasst, die auf dem Weg in die Sä- und/oder Ausbringstellung den genannten kinematischen Totpunkt überfährt, wobei die Kurbeltriebstufe (13) einen Kurbelhebel (14) umfasst, der um eine Kurbelachse (16) schwenkbar gelagert ist, und ferner einen Triebhebel (15) umfasst, der einerseits mit dem Kurbelhebel (14) gelenkig verbunden und andererseits mit dem Ausbringleitungshalter (5) und/oder der Auffangmulde (6) und/oder einem damit verbundenen Baugruppenteil gelenkig verbunden ist.

5. Landwirtschaftliche Ausbringmaschine nach dem vorhergehenden Anspruch, wobei die Kurbeltriebstufe (13) derart ausgebildet ist, dass eine virtuelle Verbindungsgerade (18) durch die beiden Gelenkpunkte des Triebhebels (15) auf dem Weg der Kurbeltriebstufe (13) in die Sä- und/oder Ausbringstellung die Kurbelachse (16) des Kurbelhebels (14) überstreicht.

6. Landwirtschaftliche Ausbringmaschine nach einem der vorhergehenden Ansprüche, wobei der Stellantrieb (12) zumindest einen schwenkbar gelagerten Stellhebel, insbesondere Triebhebel (15), aufweist, der mit der Auffangmulde (6) und/oder dem Ausbringleitungshalter (5) gekoppelt ist und auf seinem Weg in die Sä- und/oder Ausbringstellung einen/den kinematischen Totpunkt überfährt und nach Überfahren des kinematischen Totpunkts gegen einen Stellwegsanschlag (19) fährt.

7. Landwirtschaftliche Ausbringmaschine nach dem vorhergehenden Anspruch in Verbindung mit einem der Ansprüche 4-5, wobei der Stellwegsanschlag (19) die Schwenkbewegung der Kurbeltriebstufe (13) nach Überfahren des kinematischen Totpunkts begrenzt und die Sä- und/oder Ausbringstellung definiert.

8. Landwirtschaftliche Ausbringmaschine nach einem der vorhergehenden Ansprüche, wobei dem Stellantrieb (12) und/oder dem Ausbringleitungshalter (5) und/oder der Auffangwanne (6) eine Vorspann- und/oder Federeinrichtung zum Vorspannen aus der Sä- und/oder Ausbringstellung heraus und/oder auf einen die Sä- und/oder Ausbringstellung definierenden Stellwegsanschlag (19) zu zugeordnet ist.

9. Landwirtschaftliche Ausbringmaschine nach dem vorhergehenden Anspruch, wobei der Stellantrieb (12) durch die genannte Vorspann- und/oder Federeinrichtung (21) bistabil ausgebildet ist.

10. Landwirtschaftliche Ausbringmaschine nach einem der vorhergehenden Ansprüche, wobei der Stellantrieb (12) einen Elektromotor zum Verstellen der Auffangmulde in deren Auffangstellung und zurück in die Ausbringstellung umfasst, wobei der Elektromotor und/oder eine mit dem Elektromotor verbundene Getriebestufe dazu ausgebildet ist, die angefahrene Stellung der Auffangmulde (6) durch Selbsthemmung zu halten.

11. Landwirtschaftliche Ausbringmaschine nach einem der vorhergehenden Ansprüche, wobei der Stellantrieb (12) einen selbsthemmenden Spindeltrieb, insbesondere eine elektromotorische Spindelgetriebestufe, aufweist.

12. Landwirtschaftliche Ausbringmaschine nach dem Oberbegriff des Anspruchs 1 oder einem der vorhergehenden Ansprüche, wobei der Stellweg (9) des Ausbringleitungshalters (5) und/oder der Auffangmulde (6) von der Sä- und/oder Ausbringstellung in die Auffangstellung zumindest zwei zueinander abgewinkelte und/oder unterschiedlich gekrümmte und/oder gerade und gekrümmte Abschnitte (9a, 9b) umfasst.

13. Landwirtschaftliche Ausbringmaschine nach dem vorhergehenden Anspruch, wobei der Stellweg (9) einen liegenden, insbesondere etwa horizontalen, geraden Stellwegsabschnitt, der auf die Auffangstellung zuführt, und einen geneigten Stellwegsabschnitt, der auf die Sä- und/oder Ausbringstellung zuführt, aufweist, wobei der genannte geneigte, auf die Sä- und/oder Ausbringstellung zuführende Stellwegsabschnitt aufwärts geneigt ist, sodass der Ausbringleitungshalter (5) in die Sä- und/oder Ausbringstellung nach oben auf ein Sä- und/oder Ausbringgehäuse (3) zufährt.

14. Landwirtschaftliche Ausbringmaschine nach einem der vorhergehenden Ansprüche, wobei der Stellweg (9) für den Ausbringleitungshalter (5) und/oder die Auffangmulde (6) durch eine Schiebe-, insbesondere Schlittenführung (8) vorgegeben ist, die zumindest ein längliches Führungsprofil (10) aufweist, entlang dem der Ausbringleitungshalter (5) und/oder die Auffangmulde (6) verschieblich gelagert sind.

15. Landwirtschaftliche Ausbringmaschine nach einem der vorhergehenden Ansprüche, wobei der Ausbringleitungshalter (5) beweglich gelagert ist und die Auffangmulde (6) auf einem Muldenhalter (7) abgestützt, insbesondere beweglich gelagert und/oder lösbar befestigt, ist, der an dem Ausbringleitungshalter (5) befestigt ist.

## Claims

1. An agricultural application machine, in particular a sowing and/or drilling and/or fertilizer spreading machine, comprising a collecting trough (6) for collecting the application material in a trial and/or start-up operation, wherein the collecting trough (6) is coupled to an application line holder (5) and together with the same is adjustable from a sowing and/or applying position into a collecting position and back by means of an actuating drive (12), **characterized in that** in the applying position the actuating drive (12) has a self-locking feature which holds the collecting trough (6) and the application line holder (5) coupled thereto in the sowing and/or applying position.

2. The agricultural application machine according to the preceding claim, wherein in the sowing and/or applying position the application line holder (5) and the collecting trough (6) are exclusively held by the actuating drive and its self-locking feature, without any additional locking means.

3. The agricultural application machine according to any of the preceding claims, wherein the actuating drive (12) includes a transmissions, in particular a pivot lever transmission, which on its way into the sowing and/or applying position passes over a kinematic dead center and/or can be overextended, so that reaction forces of the transmission, which are caused by backward movements and/or loads of the application line holder (5) from the sowing and/or applying position back into the collecting position, drive the transmission further in the forward direction.

4. The agricultural application machine according to the preceding claim, wherein said transmission comprises a crank gear stage (13) which on its way into the sowing and/or applying position passes over said kinematic dead center, wherein the crank gear stage (13) comprises a crank lever (14) which is pivotally mounted about a crank axis (16), and furthermore comprises a drive lever (15) which on the one hand is articulated to the crank lever (14) and on the other hand is articulated to the application line holder (5) and/or the collecting trough (6) and/or an assembly part connected thereto.

5. The agricultural application machine according to the preceding claim, wherein the crank gear stage (13) is configured in such a way that a virtual straight connecting line (18) through the two pivot points of the drive lever (15) sweeps over the crank axis (16) of the crank lever (14) on the way of the crank gear stage (13) into the sowing and/or applying position.

6. The agricultural application machine according to any of the preceding claims, wherein the actuating drive (12) includes at least one pivotally mounted actuating lever, in particular drive lever (15), which is coupled with the collecting trough (6) and/or the application line holder (5) and on its way into the sowing and/or applying position passes over a/the kinematic dead center and after passing over the kinematic dead center moves against an actuating path stop (19).

7. The agricultural application machine according to the preceding claim in conjunction with any of claims 4-5, wherein the actuating path stop (19) limits the pivotal movement of the crank gear stage (13) after passing over the kinematic dead center and defines the sowing and/or applying position.

8. The agricultural application machine according to any of the preceding claims, wherein a pretensioning and/or spring device for pretensioning out of the sowing and/or applying position and/or towards an actuating path stop (19) defining the sowing and/or applying position is associated to the actuating drive (12) and or the application line holder (5) and/or the collecting trough (6).

9. The agricultural application machine according to the preceding claim, wherein the actuating drive (12) is of the bistable type due to said pretensioning and/or spring device (21).

10. The agricultural application machine according to any of the preceding claims, wherein the actuating drive (12) comprises an electric motor for adjusting the collecting trough into its collecting position and back into the applying position, wherein the electric motor and/or a gear stage connected to the electric motor is configured to maintain the approached position of the collecting trough (6) by self-locking.

11. The agricultural application machine according to any of the preceding claims, wherein the actuating drive (12) includes a self-locking spindle drive, in particular an electromotive spindle gear stage.

12. The agricultural application machine according to the preamble of claim 1 or any of the preceding claims, wherein the actuating path (9) of the application line holder (5) and/or the collecting trough (6) from the sowing and/or applying position into the collecting position comprises at least two mutually angled and/or differently curved and/or straight and curved portions (9a, 9b).

13. The agricultural application machine according to the preceding claim, wherein the actuating path (9) includes a lying, in particular approximately horizontal, straight actuating path portion which leads towards the collecting position, and an inclined actuating path portion which leads towards the sowing and/or applying position, wherein said inclined actuating path portion leading towards the sowing and/or applying position is upwardly inclined, so that the application line holder (5) moves into the sowing and/or applying position upwards towards a seed and/or application housing (3).

14. The agricultural application machine according to any of the preceding claims, wherein the actuating path (9) for the application line holder (5) and/or the collecting trough (6) is specified by a sliding guide, in particular a carriage guide (8) which includes at least one oblong guide profile (10), along which the application line holder (5) and/or the collecting trough (6) are shiftably mounted.

15. The agricultural application machine according to any of the preceding claims, wherein the application line holder (5) is movably mounted and supports the collecting trough (6) on a trough holder (7), in particular is movably mounted and/or releasably attached, which is attached to the application line holder (5).

## Revendications

1. Machine d'épandage agricole, en particulier semoir et/ou semoir en ligne et/ou épandeur d'engrais, comportant une cuvette de collecte (6) pour recueillir le produit à épandre lors d'un fonctionnement d'essai et/ou de démarrage, la cuvette de collecte (6) étant couplée à un support de conduite d'épandage (5) et pouvant être déplacée avec celui-ci, au moyen d'un actionneur (12), d'une position de semis et/ou d'épandage vers une position de collecte et inversement, **caractérisée en ce que** l'actionneur (12) possède, en position d'épandage, un mécanisme autobloquant qui maintient la cuvette de collecte (6) et le support de conduite d'épandage (5) accouplé dans la position de semis et/ou d'épandage.

2. Machine d'épandage agricole selon la revendication précédente, dans laquelle le support de conduite d'épandage (5) et la cuvette de collecte (6) sont maintenus en position de semis et/ou d'épandage exclusivement par l'actionneur et son mécanisme autobloquant, sans moyen de verrouillage supplémentaire.

3. Machine d'épandage agricole selon l'une quelconque des revendications précédentes, dans laquelle l'actionneur (12) comporte une transmission, en particulier une transmission à levier pivotant, qui, lors du déplacement vers la position de semis et/ou d'épandage, passe par un point mort cinématique et/ou peut être surtendu, de sorte que les forces de réaction de la transmission, générées par les mouvements et/ou les charges de recul du support de conduite d'épandage (5) depuis la position de semis et/ou d'épandage vers la position de collecte, continuent à entraîner la transmission vers l'avant.

4. Machine d'épandage agricole selon la revendication précédente, dans laquelle ladite transmission comprend un étage d'entraînement à manivelle (13) qui, lors de son déplacement vers la position de semis et/ou d'épandage, passe par ledit point mort cinématique, l'étage d'entraînement à manivelle (13) comprenant un levier de manivelle (14) monté de manière pivotante autour d'un axe de manivelle (16) et comprend en outre un levier d'entraînement (15) qui est relié de manière articulée, d'une part, au levier à manivelle (14) et, d'autre part, au support de conduite d'épandage (5) et/ou à la cuvette de collecte (6) et/ou à un composant relié à ceux-ci.

5. Machine d'épandage agricole selon la revendication précédente, dans laquelle l'étage d'entraînement à manivelle (13) est conçu de telle sorte qu'une droite de jonction virtuelle (18) passant par les deux points d'articulation du levier d'entraînement (15) sur la trajectoire de l'étage d'entraînement à manivelle (13) vers la position de semis et/ou d'épandage passe par l'axe de manivelle (16) du levier à manivelle (14).

6. Machine d'épandage agricole selon l'une quelconque des revendications précédentes, dans laquelle l'actionneur (12) comporte au moins un levier de commande monté de manière pivotante, en particulier un levier d'entraînement (15), qui est couplé à la cuvette de collecte (6) et/ou au support de conduite d'épandage (5) et qui, lors de son déplacement vers la position de semis et/ou d'épandage, passe par un point mort cinématique et, après avoir dépassé ce point mort cinématique, se déplace contre une butée de course de réglage (19).

7. Machine d'épandage agricole selon la revendication précédente, en combinaison avec l'une quelconque des revendications 4 à 5, dans laquelle la butée de course de réglage (19) limite le mouvement de pivotement de l'étage d'entraînement à manivelle (13) après le dépassement du point mort cinématique et définit la position de semis et/ou d'épandage.

8. Machine d'épandage agricole selon l'une quelconque des revendications précédentes, dans laquelle à l'actionneur (12) et/ou au support de conduite d'épandage (5) et/ou au bac de collecte (6) est associé un dispositif de précontrainte et/ou à ressort destiné à exercer une précontrainte à partir de la position de semis et/ou d'épandage et/ou vers une butée de course de réglage (19) définissant la position de semis et/ou d'épandage.

9. Machine d'épandage agricole selon la revendication précédente, dans laquelle l'actionneur (12) est conçu de manière bistable grâce audit dispositif de précontrainte et/ou à ressort (21).

10. Machine d'épandage agricole selon l'une quelconque des revendications précédentes, dans laquelle l'actionneur (12) comprend un moteur électrique destiné à déplacer la cuvette de collecte vers sa position de collecte et à la ramener en position d'épandage, le moteur électrique et/ou un étage de transmission relié au moteur électrique étant conçu pour maintenir la position atteinte par la cuvette de collecte (6) grâce à un mécanisme autobloquant.

11. Machine d'épandage agricole selon l'une quelconque des revendications précédentes, dans laquelle l'actionneur (12) comprend un mécanisme à vis autobloquant, en particulier un étage de transmission à vis à moteur électrique.

12. Machine d'épandage agricole selon la revendication 1 ou l'une quelconque des revendications précédentes, dans laquelle la course de réglage (9) du support de conduite d'épandage (5) et/ou de la cuvette de collecte (6) de la position de semis et/ou d'épandage à la position de collecte comprend au moins deux sections (9a, 9b) coudées l'une par rapport à l'autre et/ou de courbures différentes et/ou droites et courbes.

13. Machine d'épandage agricole selon la revendication précédente, dans laquelle la course de réglage (9) comporte une section de course de réglage rectiligne, en particulier sensiblement horizontal, menant à la position de collecte, et une section de course de réglage inclinée menant à la position de semis et/ou d'épandage, ladite section de course de réglage inclinée menant à la position de semis et/ou d'épandage étant inclinée vers le haut, de sorte que le support de conduite d'épandage (5) se déplace vers le haut, en direction d'un boîtier de semis et/ou d'épandage (3), pour atteindre la position de semis et/ou d'épandage.

14. Machine d'épandage agricole selon l'une quelconque des revendications précédentes, dans laquelle la course de réglage (9) du support de conduite d'épandage (5) et/ou de la cuvette de collecte (6) est définie par un guidage coulissant, en particulier un guidage à chariot (8), qui comporte au moins un profilé de guidage allongé (10) le long duquel le support de conduite d'épandage (5) et/ou la cuvette de collecte (6) sont montés de manière coulissante.

15. Machine d'épandage agricole selon l'une quelconque des revendications précédentes, dans laquelle le support de conduite d'épandage (5) est monté de manière mobile et la cuvette de collecte (6) est soutenue par un support de cuvette (7), en particulier monté de manière mobile et/ou fixé de façon amovible, qui est fixé au support de conduite d'épandage (5).
